Europäisches Patentamt

European Patent Office

Office européen des brevets

(11) Publication number: **0 629 423 A1**

## EUROPEAN PATENT APPLICATION

(21) Application number: **94201506.6**

(22) Date of filing: **27.05.94**

(51) Int. Cl.5: **B01D 21/00**

(30) Priority: **27.05.93 NL 9300912**

(43) Date of publication of application:
**21.12.94 Bulletin 94/51**

(84) Designated Contracting States:
**AT DE DK FR GB NL SE**

(71) Applicant: **Coöperatieve Verkoop- en Productievereniging van Aardappelmeel en Derivaten 'AVEBE' B.A.**
**Beneden Oosterdiep 27**
**NL-9641 JA Veendam (NL)**

(72) Inventor: **de Vries, Johannes**
**Drosten 22**
**NL-9481 GE Vries (NL)**

(74) Representative: **Smulders, Theodorus A.H.J., Ir. et al**
**Vereenigde Octrooibureaux**
**Nieuwe Parklaan 97**
**NL-2587 BN 's-Gravenhage (NL)**

(54) Method and apparatus for separating solid particles from liquid while forming a buffer stock.

(57) The invention relates to a method for separating solid particles from polluted liquid at least through sedimentation in a settler, a part of the sedimented solid particles being mixed as sediment suspension with the polluted liquid. According to the invention, a buffer stock is formed by at least a part of the returned solid particles, and per unit time the returned amount of solid particles is greater than the amount of solid particles in the supplied polluted liquid. The invention further relates to an apparatus suitable in particular for carrying out such method.

FIG. 1

This invention relates to a method for separating solid particles from polluted liquid at least through sedimentation in a settler, a part of the sedimented solid particles being mixed as sediment suspension with the polluted liquid. Such a method is disclosed in U.S. Patent 2,110,721.

In the known method a flow of liquid polluted with solid particles is passed by way of a basin into a settling tank, where the solid particles settle and form a sediment layer on the bottom. This sediment layer is brought into a sludge sump by mechanical means and discharged from the sludge sump as a thickened suspension by means of a pump. A small part of the thickened suspension is returned, by way of a pipe, to the mixing basin where it is mixed with the flow of polluted liquid to serve as flocculating agent. The amount of returned thickened suspension is controlled by means of a control valve. The residual amount of discharged thickened suspension is directed to a treatment plant.

In the known method the amount and the composition of the thickened suspension conducted to a treatment plant is directly dependent on the flow of polluted liquid passed into the processing apparatus: a large increase in the solids density of the flow of polluted liquid supplied leads to a substantially equally large increase in the density of the thickened suspension discharged from the sludge sump.

The known method accordingly has as a disadvantage that the composition and the amount of thickened suspension directed to the treatment plant per unit time is strongly dependent on variations in the extent of pollution in the flow of liquid supplied. Accordingly, this method is not suitable for processing liquid flows exhibiting strong peaks in the supply of solid particles, since large fluctuations in the amount and composition of the solid particles in the discharged suspension yield a product of poor homogeneity, it being difficult to add necessary additives, if any, in the appropriate amounts.

The object of the invention is to provide a method of the type mentioned, in which the suspension discharged per unit time to a treatment plant is affected to only a minor extent in composition, density and volume by changes in the composition of the amount of polluted liquid supplied per unit time to the settler.

To that end, the method according to the invention is characterized in that a buffer stock is formed by at least a part of the returned solid particles, and per unit time the returned amount of solid particles is greater than the amount of solid particles in the supplied polluted liquid.

Because per unit time the returned amount of solid particles is greater than the amount of solid particles in the liquid supplied, with a buffer stock being formed by at least a part of the returned solid particles, a change in the composition of the liquid supplied has only a minor influence on the composition of the sediment suspension. In fact, because the polluted liquid supplied is mixed with the returned suspension, the influence of a change in the solids density of the supplied polluted liquid relative to the total volume fed into the settler is at most half as large as in the case where only the polluted liquid is fed into the settler. Moreover, through the formation of the buffer stock, changes in particular in the composition of the polluted liquid supplied are smoothed.

In the case where liquid is supplied which is polluted with solid particles of different settling behaviour, it is particularly advantageous when the method, in accordance with a further preferred embodiment of the invention, is characterized in that in the settler a fractionated sediment layer is formed, which is brought into a thickened substantially homogeneous sediment suspension by mechanical means, all this in such a manner that the sediment suspension directed to the sludge treatment plant has a composition which is substantially homogeneous and relatively constant in time, with a density and volume substantially constant in time.

The invention further relates to a processing apparatus for liquid polluted with solid particles, which is particularly suitable for the use of the method described in the foregoing, this processing apparatus comprising at least a settler, a supply pipe, an underflow pipe and an effluent discharge pipe, a return pipe, sediment suspension forming means, a sediment suspension discharge pipe and at least one pump, the return pipe having one end connecting to the underflow pipe and the sediment suspension discharge pipe and the other end terminating near the inlet side of the settler.

It is known in such apparatuses to control the volume of the returned sediment suspension by means of a valve included in the return pipe, this valve being controlled, for instance, by measuring and control means included in the supply pipe. Because the density of the suspension flowing through the underflow pipe is typically subject to large fluctuations, the known apparatus requires that the treatment plant be geared to the maximum supply of solid particles. Most of the time, however, the supply of solid particles will deviate from the maximum to a relatively large extent. Moreover, the flow velocities of the suspension in the different parts of the apparatus will be markedly subject to fluctuations, which may give rise to problems, for instance because sediment may start depositing in the pipes when the flow velocity becomes too low.

In order to solve the above problems the processing apparatus according to the invention is characterized in that the processing apparatus is so designed that a volume of sediment suspension flowing through the underflow pipe, independently of the density thereof, is divided between the return pipe and the sediment suspension discharge pipe in a predetermined volume ratio, the pump being adapted to withdraw a substantially constant volume of sediment suspension per time unit from the settler through the underflow pipe at a substantially constant velocity.

Because a constant volume of suspension, independently of its density, is returned to the settling tank, it is possible in a simple manner to tailor the dimensions of the plant to the volume of sediment suspension to be processed. Because the flow velocity of the sediment suspension is kept substantially constant, sediment deposition in the pipe system of the apparatus is prevented in a simple manner.

In particular if the composition of the supply of polluted liquid is highly varying, the sediment layer formed on the bottom of the settling tank will have an inhomogeneous composition. In order to nevertheless obtain a substantially homogeneous final product from the treatment plant, it is advantageous when the processing apparatus according to the invention is characterized in that the settler comprises a substantially cylindrical settling tank and a sludge sump arranged concentrically in the bottom of the settling tank, the supply pipe terminating near the centre of the top of the settling tank, the sediment suspension forming means comprising a mechanical scraper adapted for rotation about a vertically extending central shaft, this scraper comprising at least one slat member and one spiral member, the or each slat member connecting at least to the sludge sump, and the or each spiral part extending from the vicinity of the circumferential wall of the settling tank, the or each slat member connecting at least to a spiral member in radial direction and the or each slat member in operation leading the spiral member connecting thereto in the direction of rotation.

By a slat member as used herein is meant a scraper part where a plurality of scraper surfaces have been provided, these scraper surfaces in each case including an angle with a radial of the settling tank, in such a manner that the side of each scraper surface that leads in operation is proximal to the sludge sump.

By a spiral member as used herein is meant a scraper part consisting of one or more segments, this segment or these segments together forming a substantially closed, spiral-shaped blade, the concave side of the blade being proximal to the sludge sump.

Upon feeding polluted liquid into the settling tank, the liquid flows away in radial direction, the relatively heavy solid particles settling closer to the centre of the settling tank than do the relatively light particles, so that a fractionated sediment layer is formed. In the preferred embodiment of the apparatus according to the invention, this fractionation is largely undone by the combined scraper. The spiral member of the scraper arranged on the outside pushes the relatively light particles in one revolution of the scraper entirely within the reach of the slat member of the scraper. By the slat member of the scraper the relatively light particles are subsequently mixed with the relatively heavier particles, the mixture thus formed being pushed into the sludge sump in a number of revolutions corresponding at a maximum with the number of scraper blades.

In a further preferred embodiment of the invention the spiral member extends in radial direction behind at least a part of the slat member. By virtue of this design of the scraper, the spiral member pushes the sediment constituted by the relatively light solid particles directly behind the slat member of the scraper, so that the relatively light particles are mixed uniformly with the sediment layer constituted by the relatively heavy solid particles and subsequently pushed away by the or a next slat member, so that the suspension formed in the sludge sump becomes even more homogeneous in composition.

To clarify the invention an exemplary embodiment of the method and of the processing apparatus will now be described with reference to the accompanying drawings.

Fig. 1 shows schematically the apparatus according to the invention;

Fig. 2 shows the different volume flows and densities in the apparatus; and

Fig. 3 shows a top plan view of the scraper according to the invention in the settler.

Connected to a settling tank 1 is a supply pipe 2 for supplying a flow of polluted liquid centrally at the top of the settling tank 1. Arranged in the settling tank 1 is a rotary scraper 5 for passing a sediment layer 4 formed on the bottom 3 of the settling tank 1 into a sludge sump 6 arranged concentrically in the bottom 3 of the settling tank 1. The settling tank 1 is further provided with an effluent discharge pipe 13 for discharging purified liquid.

Connecting to the lower end of the sludge sump 6 is an underflow pipe 7 through which the sediment suspension can be withdrawn from the sludge sump by means of a pump 8. The underflow pipe 7 is connected to a return pipe 9 and a sediment discharge pipe 10. The return pipe 9 connects the underflow pipe 7 with the supply pipe 2, whilst the sediment discharge pipe 10 connects to a treatment plant 11. Included in the sediment discharge pipe 10 is a second pump 12. Connected between the second pump 12 and the treatment plant 11 is a pipe 14 for adding, by means of a third pump 15, additives from an additive device 16 to the sediment suspension in the sediment discharge pipe 10. A return pipe 17 connects the treatment plant 11 with the supply pipe 2.

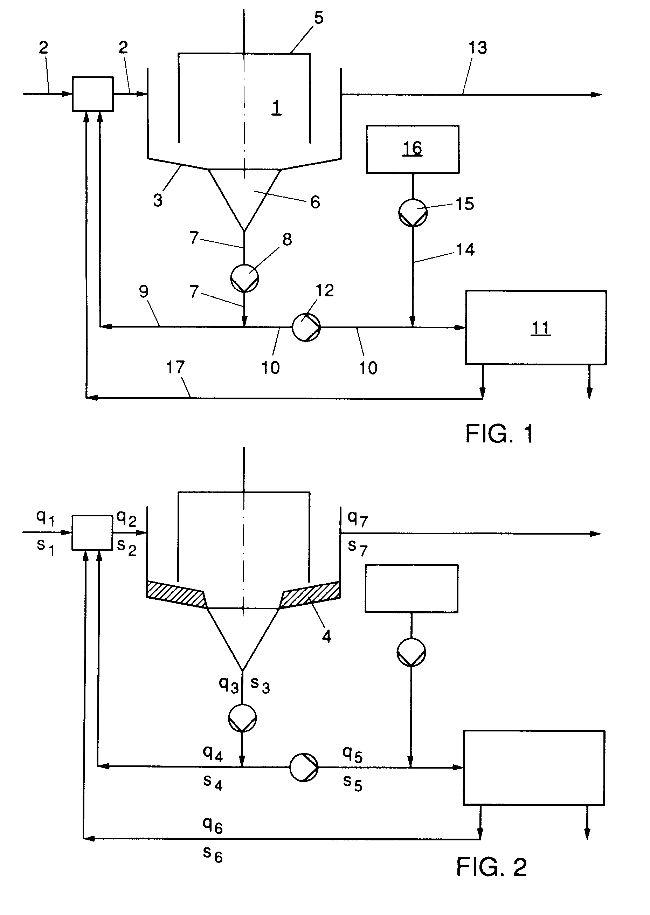

With the apparatus according to Fig. 1, and in accordance with a preferred embodiment of the method according to the invention, solid particles are separated from an amount of liquid supplied through the supply pipe 2, as follows.

The polluted liquid is fed into the settling tank 1 where the solid particles settle, thereby forming a sediment layer 4. The purified liquid is discharged through the effluent discharge pipe 13. At least a part of the sediment layer 4 is continuoulsy pushed into the sludge sump 6 by means of the scraper 5. The sediment suspension formed in the sludge sump 6 is discharged therefrom through the underflow pipe 7, a part of the discharged sediment suspension being returned throught the return pipe 9 to the supply pipe 2, where it is mixed with newly supplied polluted liquid. The rest of the discharge sediment suspension is passed to the treatment plant 11 through the sediment discharge pipe 10, where a further dewatering of the sediment suspension is obtained. In the sediment discharge pipe 10 one or more additives are added to the sediment suspension through the pipe 14.

Per unit time the volume of polluted liquid supplied through the supply pipe 2, the volume of sediment suspension discharged from the sludge sump 6 and the volume returned through the return pipe 9 are substantially constant, the product of the solids density of the returned sediment suspension and the returned volume being greater than the product of the solids density in the supplied polluted liquid and the supplied volume of polluted liquid.

This method of separating solid particles from polluted liquid has the advantage that because the different flows are kept constant in volume while the volume of sediment suspension returned per unit time contains more solid particles than the volume of polluted liquid supplied in the same unit of time, there is likewise discharged to the treatment plant a volume of sediment suspension varying little in time, with a substantially constant composition, so that in a simple and properly controllable manner a product of constant quality can be obtained from the treatment plant. The liquid withdrawn from the sediment suspension in the treatment plant 11 is passed through the return pipe 17 to the supply pipe 2, where it is mixed with the polluted liquid being supplied.

Fig. 2 shows an example of the different liquid flows and densities in the settler according to Fig. 1, in a situation of equilibrium, at a relatively randomly chosen input volume.

Suppose that through the supply pipe 2 a liquid flow (q1) of, for instance, 1000 m³/h with a density (S1) of 5 kg/m³ is supplied. Through the effluent discharge pipe 13 the purified liquid is discharged at 976 m³/h (q7) with an optimized density of ideally 0 kg/m³ (S7). The sediment suspension is withdrawn from the sludge sump at 280 m³/h (q3) with a density of 62.5 kg/m³ (S3). Of this amount, 200 m³/h (q4), likewise with a density of 62.5 kg/m³ (S4), is returned through the return pipe 9 and the residual 80 m³/h (q5), likewise with a density of 62.5 kg/m³ (S5), is passed to the treatment plant 11. In the treatment plant 11, in the form of a dewatering apparatus, another 56 m³/h (q6) of liquid, with a density of ideally 0 kg/m³ (S6), is withdrawn from the sediment suspension and returned through the return pipe 17 to the supply pipe.

Accordingly, in the given situation of equilibrium, a volume of liquid of 1256 m³/h (q2) with a density of 13.9 kg/m³ (S2) flows into the settling tank 1. Therefore, in the situation of equilibrium, 5000 kg/h of solid particles are fed into the apparatus as well as discharged to the treatment plant, and moreover 17500 kg/h of solid particles are discharged from the sludge sump as well as fed into the settling tank.

Given a settling tank surface area (O) of 380 m², a density (Pd) of 1.1 kg/l and a scraper revolution time (t) of 1/2 h, a sediment layer of an average thickness of $(q2.S2.t)/(O.Pd) = 20.9$ mm. If just the polluted liquid were fed into the settling tank 1, a sediment layer 4 of an average thickness of $(q1.S1.t)/(O.Pd) = 6$ mm would be formed. In the given case, the buffer capacity of the settling tank is therefore approximately 3.5 times the average supply. In other words, starting from empty status of the settling tank, the apparatus can work at an average dirt load for approximately 105 minutes without sediment having to be discharged from the sludge sump.

In the case of a sudden, temporary change, starting from the state of equilibrium, in the density (S1) of the liquid being supplied, the density (S3) of the sediment suspension discharged from the sludge sump will also change. A doubling of the density (S1) of the suspension supplied will result in only a relatively small change in the density (S5) of the sediment suspension discharged to the treatment plant 11 by virtue of the recirculation of a large part of the sediment suspension. The occurrence of loading peaks in the polluted liquids being supplied are smoothed over a relatively long period. As a result, it is possible in a simple manner to add the appropriate amounts of additives to the sediment suspension to be processed in the treatment plant.

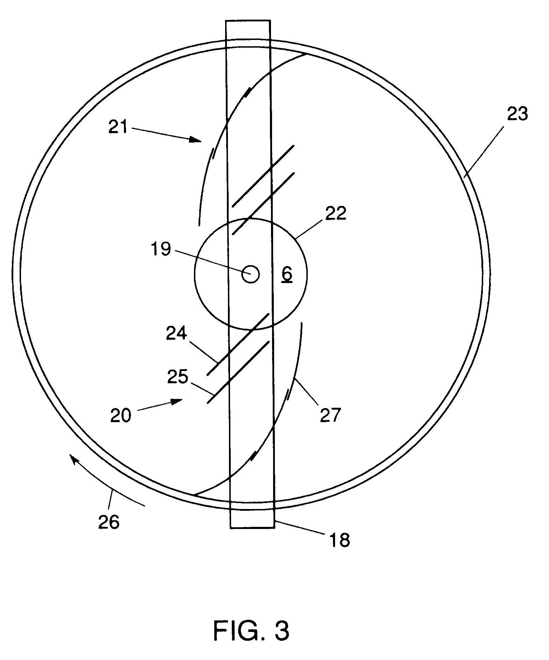

Fig. 3 is a top plan view of the settling tank 1 with the scraper 5 arranged therein. Arranged centrally in the bottom 3 of the settling tank 1 is a sludge sump 6. Arranged above the settling tank 1 is a scraper bridge 18 adapted to rotate about a central shaft 19. Formed on the scraper bridge 18 on opposite sides of the central shaft are a slat member 20 and a spiral member 21.

Each slat member 20 extends from the longitudinal edge 22 of the sludge sump 6 in the direction of the outer wall 23 of the settling tank 1, and each spiral member 21 extends from the longitudinal wall 23 in the direction of the sludge sump.

Each slat member 20 is formed by a plurality of scraper surfaces 24, 25. The number of surfaces depends, among other things, on the diameter of the settling tank. In top plan view, the scraper surfaces each include an angle with the scraper bridge, in such a manner that the side of each scraper surface 24, 25 which in operation is in leading position, is proximal to the sludge sump. The scraper surfaces 24, 25 are rigidly connected with the scraper bridge 18. The direction of rotation of the scraper bridge is indicated by the arrow 26 in Fig. 3.

Each spiral member 21 is formed by a surface consisting of a plurality of segments, the number thereof being likewise dependent, among other things, on the diameter of the settling tank. The segments together form a substantially closed spiral-shaped blade 27, with the concave side of the blade 27 being proximal to the sludge sump 6. The spiral member is dragged over the bottom of the settling tank 1 by the scraper bridge, for instance by means of rods or cables. The spiral member 21 extends at some distance behind the greater part of the slat member 20.

During operation the polluted liquid is supplied centrally into the settling tank 1. The liquid flows away in radial direction towards the outer wall of the settling tank, the heavier solid particles settling closest to or even in the sludge sump 6, while the lighter particles settle closest to the outer wall 23 of the settling tank 1. As a result, a sediment layer 4 is formed which is fractionated in radial direction according to weight.

Per revolution the scraper blade 25 of the slat member 20 pushes the relatively heavy particles behind the adjacent scraper blade 24, whereafter the opposite scraper blade 24 pushes them into the sludge sump 6 afer a semirevolution of the scraper bridge 18.

In approximately one revolution of the scraper bridge 18 the spiral member 21 pushes the relatively lighter particles behind and past the slat member 20 behind an inner scraper blade 24 of the slat member, or may even push a part thereof directly into the sludge sump 6. By the next inner scraper blade 24 these relatively light particles are pushed into the sludge sump 6 together with the heavier particles.

A slat scraper has the advantage that the stiff blades make it possible to displace relatively heavy loads, but generally has the disadvantage that the sediment is passed into the sludge sump in phases. As a result, with such a scraper the sediment may become fairly inhomogeneous. A spiral scraper, by contrast, has the advantage that in one revolution it mixes all particles directly and pushes them to the sludge sump, but generally has the disadvantage that it can displace only light loads. The scraper according to the invention, on the other hand, has the combination advantage that the relatively light solid particles are displaced by the spiral member 21 and, properly mixed, are mixed with the heavier particles dislodged only by the slat member 20. As a result, in the sludge sump 6 a sediment suspension is formed which has a homogeneous, relatively constant composition, so that in a simple manner a likewise homogeneous high-quality product can be obtained from the treatment plant.

The invention is not in any way limited to the examples given. Within the scope of the invention various other embodiments are possible. Thus, flocculating agents can be added to the supply of polluted liquid to obtain improved settling behavior, and the settling tank can be replaced, for instance, with a settling tank with tangential in-feed, in order to obtain a homogenization of the sediment in a different manner than through the scrapers.

The essence is that in the method according to the invention, through recirculation of a relatively large part of the settled solid particles, changes in the density of the supply of polluted liquid have a relatively small influence on the density of the flow of liquid fed into the settling tank, and that in the apparatus according to the invention the flow velocities and the distribution of the sediment suspension withdrawn from the sludge sump is constant and a homogeneous final product of high quality is obtained from the treatment plant.

**Claims**

1. A method for separating solid particles from polluted liquid at least through sedimentation in a settler, a part of the sedimented solid particles being mixed as sediment suspension with the polluted liquid, characterized in that a buffer stock is formed by at least a part of the returned solid particles, and per unit time the returned amount of solid particles is greater than the amount of solid particles in the supplied polluted liquid.

2. A method according to claim 1. characterized in that the sediment suspension formed in the settler is discharged therefrom, a part of the discharged sediment suspension is returned into the settler and the remainder of the discharged sediment suspension is passed to a treatment plant, whilst per unit time the volume of polluted liquid fed into the settler, the volume of sediment suspension discharged from the settler and the volume of returned sediment suspension are substantially constant, the product of the density of solid particles of the returned sediment suspension and the returned volume being greater than the product of the density of solid particles in the supplied polluted liquid and the volume of supplied polluted liquid.

3. A method according to claim 1 or 2, characterized in that the volume of the returned sediment suspension is greater than half the volume of the sediment suspension discharged from the settler.

4. A method according to any one of claims 1-3, characterized in that the sediment suspension is discharged from the settler at a substantially constant flow velocity.

5. A method according to any one of the preceding claims, characterized in that the supplied volume of polluted liquid is between 2 and 10 times, and preferably 5 times, as large as the volume of returned sediment suspension; and the returned volume of sediment suspension is between 1.5 and 5 times, and preferably 2.5 times, as large as the volume of sediment suspension passed to the treatment plant.

6. A method according to any one of the preceding claims, characterized in that the buffer capacity of the settling tank is between 1 and 5 times, and preferably 3.5 times, as large as the supply capacity.

7. A method according to any one of the preceding claims, characterized in that in the settler a fractionated sediment layer is formed, this sediment layer being brought into a thickened, substantially homogeneous sediment suspension by mechanical means, in such a manner that the sediment suspension passed to the sludge treatment plant has a composition which is substantially homogeneous and relatively constant in time and with a density and volume substantially constant in time.

8. A processing apparatus for liquid polluted with solid particles, suitable in particular for the use of the method according to any one of the preceding claims, said processing apparatus comprising at least a settler, a supply pipe, an underflow pipe and an effluent discharge pipe, a return pipe, sediment suspension forming means, a sediment suspension discharge pipe and at least one pump, the return pipe having one end connecting to the underflow pipe and the other end terminating near the inlet side of the settler, characterized in that the processing apparatus is so designed that a volume of sediment suspension flowing through the underflow pipe, independently of the density thereof, is divided in a predetermined volume ratio between the return pipe and the sediment suspension discharge pipe, the pump being adapted for withdrawing from the settler through the underflow pipe a substantially constant volume of sediment suspension per unit time at a substantially constant velocity.

9. An apparatus according to claim 8, characterized in that the settler comprises a substantially cylindrical settling tank and a sludge sump arranged concentrically in the bottom of the settling tank, the supply pipe terminating near the centre of the top of the settling tank, the sediment suspension forming means comprising a mechanical scraper adapted for rotation about a vertically extending central shaft, said scraper comprising at least one slat member and one spiral member, the or each slat member connecting at least to the sludge sump, and the or each spiral member extending from the vicinity of the circumferential wall of the settling tank, the or each slat member connecting at least to a spiral member in radial direction, and the or each slat member during operation leading the spiral member connecting thereto in the direction of rotation.

10. An apparatus according to claim 9, characterized in that the spiral member extends in radial direction behind at least a part of the slat member.

11. An apparatus according to claim 9 or 10, characterized in that the scraper comprises two slat members arranged opposite each other relative to the axis of rotation of the scraper and two spiral members.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | GB-A-1 261 913 (ENGLISH CLAYS LOVERING POCHIN & CO.LTD) <br> * page 1, line 61 - line 82; claim 1; figures 1,2 * | 1,2,7-9 | B01D21/00 |
| A | US-A-3 685 654 (MACLELLAN ET AL.) <br> * column 3, line 47 - line 58; figure 1 * | 1,2,7-9 | |
| A,D | US-A-2 110 721 (FISCHER) | 1,8 | |
| A | US-A-4 388 195 (GUNTER VON HAGEL ET AL.) <br> * column 7, line 26 - line 44; figures * | 1,8 | |
| A | US-A-2 627 978 (CURTIS) <br> * column 3, line 44 - line 62; figures 1,2 * | 8 | |
| A | US-A-1 960 707 (LOGUE ET AL) <br> * page 1, line 65 - line 92; figure 3 * | 8 | |

TECHNICAL FIELDS
SEARCHED      (Int.Cl.5)

B01D

The present search report has been drawn up for all claims

| Place of search | Date of completion of the search | Examiner |
|---|---|---|
| THE HAGUE | 28 July 1994 | Plaka, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)